(19) Europäisches Patentamt / European Patent Office / Office européen des brevets

(11) **EP 4 668 208 A1**

(12) **EUROPEAN PATENT APPLICATION**
published in accordance with Art. 153(4) EPC

(43) Date of publication:
**24.12.2025 Bulletin 2025/52**

(21) Application number: **24770278.0**

(22) Date of filing: **05.02.2024**

(51) International Patent Classification (IPC):
**G06T 7/00** (2017.01)

(52) Cooperative Patent Classification (CPC):
**G06T 7/00**

(86) International application number:
**PCT/JP2024/003705**

(87) International publication number:
**WO 2024/190158 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023039351**

(71) Applicant: **JVCKenwood Corporation**
**Yokohama-shi, Kanagawa 2210022 (JP)**

(72) Inventor: **TAKEHARA, Hideki**
**Yokohama-shi, Kanagawa 221-0022 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(54) **IMAGE CLASSIFICATION DEVICE, IMAGE CLASSIFICATION METHOD, AND IMAGE CLASSIFICATION PROGRAM**

(57)     A feature extraction unit (510) outputs first and second feature vectors of an input image. An averaged first/second feature calculation unit (520a, 520b) calculates an averaged first/second feature vector by averaging first/second feature vectors of a given class and obtains an averaged first/second feature matrix by aggregating averaged first/second feature vectors of all classes. A first/second feature similarity calculation unit (532a, 532b) calculates a first/second similarity from the first/second feature vector of the input image and a first/second weight matrix. The averaged first/second feature calculation unit (520a, 520b) replaces the first/second weight matrix of the first/second feature similarity calculation unit (532a, 532b) with the averaged first/second feature matrix.

FIG. 7A

EP 4 668 208 A1

## Description

## TECHNICAL FIELD

The present invention relates to image classification technology.

## BACKGROUND ART

Human beings can learn new knowledge through experiences over a long period of time and can maintain old knowledge without forgetting it. Meanwhile, the knowledge of a deep neural network (DNN) that uses a convolutional neutral network (CNN), etc. depends on the dataset used in learning. To adapt to a change in data distribution, it is necessary to re-learn DNN parameters in response to the entirety of the dataset. In DNN, the precision of estimation for old tasks will be decreased as new tasks are learned. Thus, catastrophic forgetting cannot be avoided in DNN. Namely, the result of learning old tasks is forgotten as new tasks are being learned in continuous learning.

Incremental learning or continual learning is proposed as a scheme to avoid catastrophic forgetting. Continual learning is a learning method that improves a current trained model to learn new tasks and new data as they occur, instead of training the model from scratch.

Human beings can also learn new knowledge from a small number of images. On the other hand, artificial intelligence using deep learning that uses a convolutional neural network, etc., relies on big data (a large number of images) used for learning. It is known that, when artificial intelligence using deep learning is trained on a small number of images, it falls into overfitting characterized by good local performance but poor generalization performance.

Few-shot learning has been proposed as a method to avoid overfitting. Few-shot learning is a learning method that uses big data in a base task to learn basic knowledge and then uses the basic knowledge to learn new knowledge from a small number of images in a new task.

Few-shot class incremental learning is known as a method for solving the problems of both continuous learning and few-shot learning (Non-patent literature 1). Technology as one scheme of few-shot learning that normalizes a feature vector and a weight vector and uses a cosine similarity is also known (Non-patent literature 2).

## RELATED-ART LITERATURE

## NON-PATENT LITERATURE

[Non-patent literature 1] Tao, Xiaoyu, et al. "Few-shot class-incremental learning." Proceedings of the IEEE/CVF Conference on Computer Vision and Pattern Recognition. 2020
[Non-patent literature 2] Chen, Wei-Yu, et al. "A closer look at few-shot classification." arXiv preprint arXiv: 1904.04232 (2019)

## SUMMARY OF INVENTION

In the related art, there is a problem in that image classification accuracy is not sufficiently high in incremental learning or learning of a small number of images.

The embodiment addresses the issue described above, and a purpose thereof is to provide an image classification technology capable of improving the accuracy of classification of images in incremental learning or learning of a small number of images.

An image classification apparatus according to an embodiment includes: a feature extraction unit that outputs a first feature vector of an input image and outputs a second feature vector that is a feature vector different from the first feature vector; an averaged first feature calculation unit that calculates an averaged first feature vector by averaging first feature vectors of a given class and obtains an averaged first feature matrix by aggregating averaged first feature vectors of all classes; an averaged second feature calculation unit that calculates an averaged second feature vector by averaging second feature vectors of a given class and obtains an averaged second feature matrix by aggregating averaged second feature vectors of all classes; a first feature similarity calculation unit that calculates a first similarity from the first feature vector of the input image and a first weight matrix; and a second feature similarity calculation unit that calculates a second similarity from the second feature vector of the input image and a second weight matrix. The averaged first feature calculation unit replaces the first weight matrix of the first feature similarity calculation unit with the averaged first feature matrix, and the averaged second feature calculation unit replaces the second weight matrix of the second feature similarity calculation unit with the averaged second feature matrix.

"First" in the above description is exemplified by "deep layer" or "first deep layer" in the embodiments, and "second" is exemplified by "shallow layer" or "second deep layer" in the embodiments.

Another embodiment relates to an image classification method. The method includes: outputting a first feature vector of an input image and outputting a second feature vector that is a feature vector different from the first feature vector; calculating an averaged first feature vector by averaging first feature vectors of a given class and obtaining an averaged first feature matrix by aggregating averaged first feature vectors of all classes; calculating an averaged second feature vector by averaging second feature vectors of a given class and obtaining an averaged second feature matrix by aggregating averaged second feature vectors of all classes; calculating a first similarity from the first feature vector of the input image and a first weight matrix; and calculating a second similarity from the second feature vector of the input image and a second weight matrix. The calculating of the averaged first feature replaces the first weight matrix of the calculating of the first similarity with the averaged first feature matrix, and the calculating of the averaged second feature replaces the second weight matrix of the calculating of the second similarity with the averaged second feature matrix.

"First" in the above description is exemplified by "deep layer" or "first deep layer" in the embodiments, and "second" is exemplified by "shallow layer" or "second deep layer" in the embodiments.

Optional combinations of the aforementioned constituting elements, and implementations of the embodiments in the form of methods, apparatuses, systems, recording mediums, and computer programs may also be practiced as modes of the embodiments.

According to the embodiment, an image classification technology capable of improving the accuracy of classification of images in incremental learning or learning of a small number of images can be provided.

BRIEF DESCRIPTION OF DRAWINGS

[Fig. 1] Fig. 1 shows a configuration of an image classification learning apparatus according to the embodiment.
[Fig. 2] Fig. 2 is a flowchart illustrating an overall flow of learning by the image classification learning apparatus of Fig. 1.
[Fig. 3] Fig. 3 shows a configuration related to base class learning by the image classification learning apparatus of Fig. 1.
[Fig. 4] Fig. 4 is a flowchart illustrating a detailed operation of the image classification learning apparatus of Fig. 1 in base class learning using a base dataset.
[Fig. 5] Fig. 5 illustrates the deep-layer feature vector and the shallow-layer feature vector.
[Fig. 6] Fig. 6 is a flowchart illustrating a method of calculating the average deep-layer feature matrix and the average shallow-layer feature matrix.
[Fig. 7A] Fig. 7A shows an example of a configuration related to incremental class learning by the image classification learning apparatus.
[Fig. 7B] Fig. 7B shows a further example of a configuration related to incremental class learning by the image classification learning apparatus.
[Fig. 7C] Fig. 7C shows a still further example of a configuration related to incremental class learning by the image classification learning apparatus.
[Fig. 8A] Fig. 8A is a flowchart illustrating a detailed operation of the image classification learning apparatus in an example of incremental class learning using an incremental dataset.

[Fig. 8B] Fig. 8B is a flowchart illustrating a detailed operation of the image classification learning apparatus in a further example of incremental class learning using an incremental dataset.
[Fig. 8C] Fig. 8C is a flowchart illustrating a detailed operation the image classification learning apparatus in a still further example of incremental class learning using an incremental dataset.
[Fig. 9] Fig. 9 shows a configuration of the image classification apparatus.
[Fig. 10] Fig. 10 is a flowchart illustrating a detailed operation of the image classification apparatus.
[Fig. 11] Fig. 11 shows a configuration of the image incremental classification apparatus.
[Fig. 12] Fig. 12 is a flowchart illustrating a detailed operation of the image incremental classification apparatus.

DESCRIPTION OF EMBODIMENTS

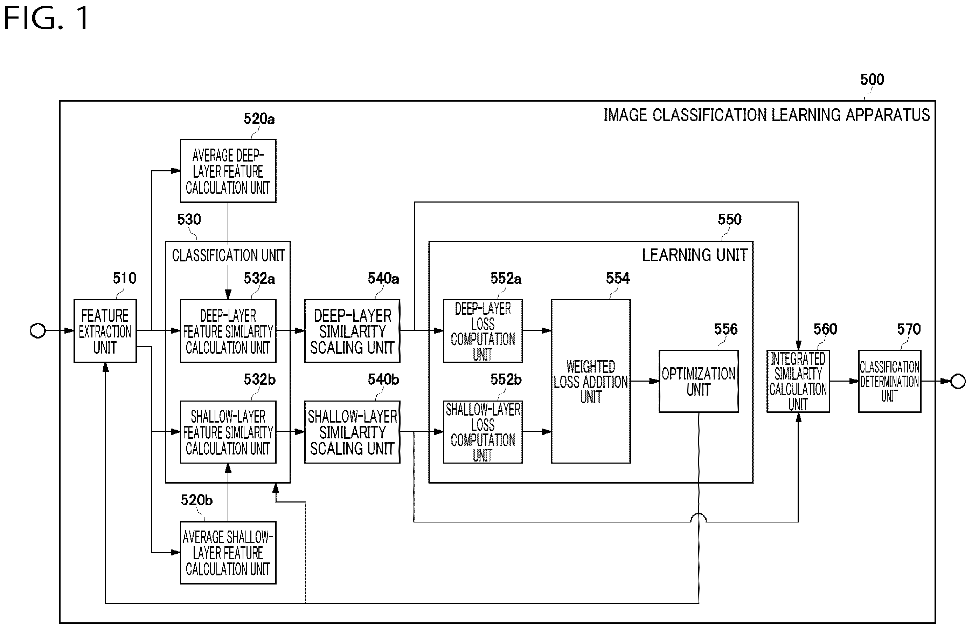

Fig. 1 shows a configuration of an image classification learning apparatus 500 according to the embodiment. The image classification learning apparatus 500 performs few-shot class incremental learning that continually learns an incremental class comprised of a small number of training data items after leaning a base class comprised of a large number of training data items.

The image classification learning apparatus 500 includes a feature extraction unit 510, an average deep-layer feature calculation unit 520a, an average shallow-layer feature calculation unit 520b, a classification unit 530, a deep-layer similarity scaling unit 540a, a shallow-layer similarity scaling unit 540b, a learning unit 550, an integrated similarity calculation unit 560, and a classification determination unit 570. The classification unit 530 includes a deep-layer feature similarity calculation unit 532a and a shallow-layer feature similarity calculation unit 532b. The learning unit 550 includes a deep-layer loss computation unit 552a, a shallow-layer loss computation unit 552b, a weighted loss addition unit 554, and an optimization unit 556.

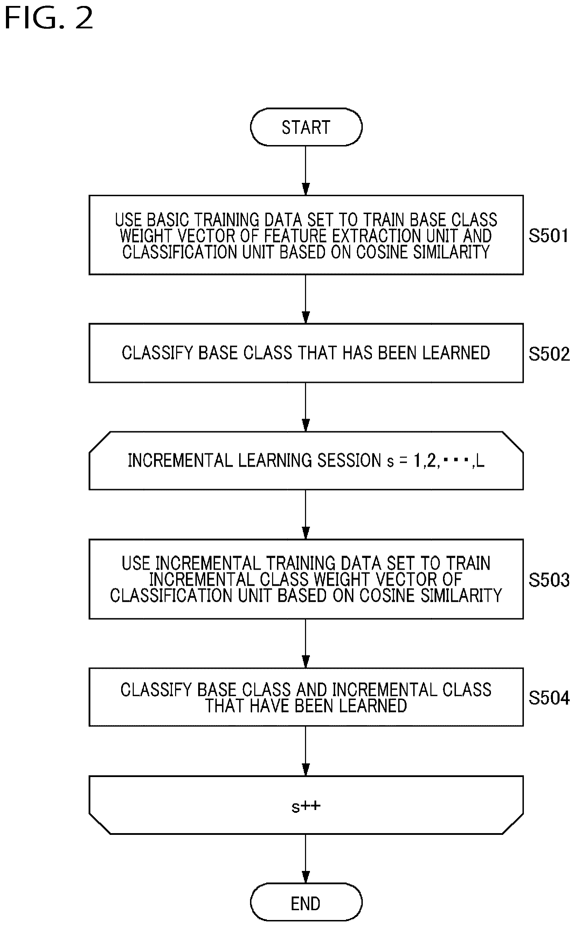

Fig. 2 is a flowchart illustrating an overall flow of learning by the image classification learning apparatus 500. The configuration and operation of the image classification learning apparatus 500 will be described with reference to Fig. 1 and Fig. 2.

First, a description will be given of a base training dataset and an incremental training dataset.

The base training dataset is a supervised dataset including a large number of base classes (e.g., about 100 to 1000 classes), wherein each class is comprised of a large number of images (e.g., 3000 images). The base training dataset is assumed to have a sufficient amount of data to allow learning a general classification task alone. It is assumed here that the number of base classes is 60.

On the other hand, the incremental training dataset is a supervised dataset including a small number of incremental classes (e.g., about 2 to 10 classes), wherein each incremental class is comprised of a small number of images (e.g., about 1 to 10 images). It is assumed here that the set includes a small number of images but may include a large number of images provided that the number of classes is small. It is assumed here that the number of incremental classes is 5.

The base training data set is used to train the base class weight vector of the feature extraction unit 510 and the classification unit 530 based on the cosine similarity (S501). The learning session that performs learning by using the base training dataset will be denoted as session 0. This will also be referred to as the initial session.

The base class weight vector of the feature extraction unit 510 and the classification unit 530 that have been trained is not updated at the time of incremental learning.

The base class image that has been learned is classified (S502). This step does not necessarily have to be performed.

The incremental learning session s is then repeated L times (s=1, 2, ..., L).

The incremental training data set s is used to train the incremental class weight vector of the incremental session s of the classification unit 530, based on the cosine distance (S503).

The base class and the incremental class that have been learned are classified (S504). This step does not necessarily have to be performed.

s is incremented by 1, control returns to step S503, steps S503-S504 are repeated until s=L, and the process is terminated when s exceeds L.

It is assumed that L=8. In this case, 65 classes have been learned at the end of incremental learning session 1, 70 classes have been learned at the end of the incremental learning session 2, and 100 classes have been learned at the end of the incremental learning session 8.

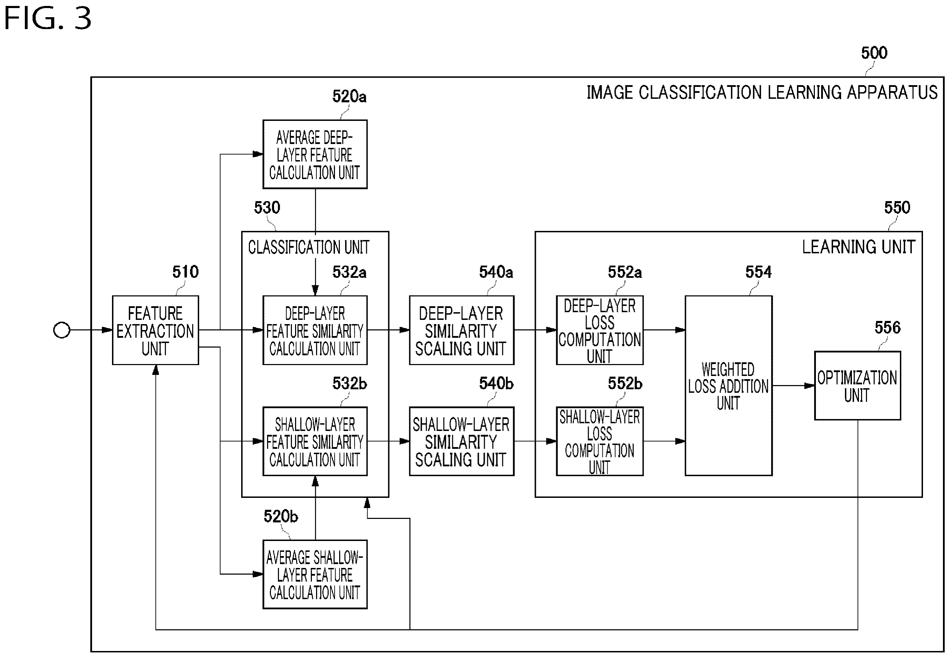

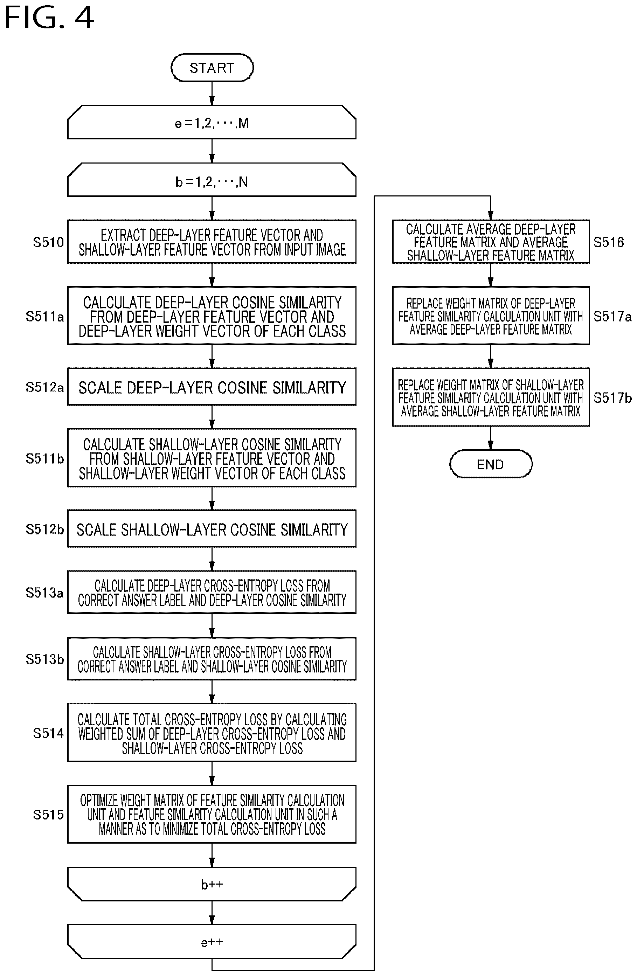

Fig. 3 shows a configuration related to base class learning by the image classification learning apparatus 500. Fig. 4 is a flowchart illustrating a detailed operation of the image classification learning apparatus 500 in base class learning using a base dataset. The operation of base class learning by the image classification learning apparatus 500 will be described in detail with reference to Figs. 3 and 4.

Learning is performed N times in batch size units (b=1, 2, ..., N). For example, the batch size is 128. The number of epochs repeated is M (e=1, 2, ..., M). It is assumed that the number of epochs is 400.

When an image is input to the feature extraction unit 510, deep-layer feature vector and the shallow-layer feature vector are extracted (S510).

First, a description will be given of the deep-layer feature vector and the shallow-layer feature vector.

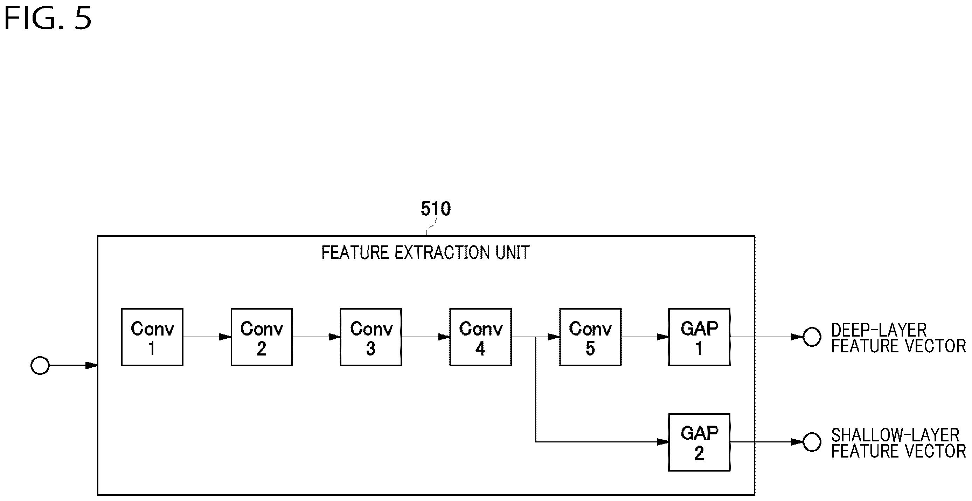

Fig. 5 illustrates the deep-layer feature vector and the shallow-layer feature vector.

The feature extraction unit 510 includes CONV1 to CONV5, which are convolutional layers of ResNet-18, and GAP1 (Global Average Pooling) and GAP2. GAP converts the feature map output from the convolutional layers into a feature vector. A 7×7 512-channel feature map is input to GAP1, and a 512-dimension deep-layer feature vector is output. A 14×14 256-channel feature map is input to GAP 2 from CONV4, and a 256-dimension shallow-layer feature vector is output. A 28×28 128-channel feature map, a 56×56 64-channel feature map, and a 112×112 64-channel feature map are output from CONV3, CONV2, and CONV1, respectively.

A deep-layer feature vector has a low resolution of 7×7 as translated into a feature map and includes summary information on the image as a whole because the vector convolves a wide range in the image as a whole. On the other hand, a shallow-layer feature vector has a high resolution of 14x14 as translated into a feature map and includes detailed information on an image locality because the vector convolves a narrower range in the image. Meanwhile, the deep-layer feature vector includes a feature vector of a higher dimension than the shallow-layer feature vector.

The feature extraction unit 510 may be a deep learning network other than ResNet-18 (e.g., VGG16 and ResNet-34) having a large number of weight parameters, and the feature vector may have a dimension other than 512 and 256. Further, the feature map input to GAP2 may be from a convolutional layer other than CONV4 such as CONV3 and CONV2. In addition, the feature extraction unit 510 in this example is assumed to output two feature vectors but may output one or three or more feature vectors. In this example, the feature map output from the CONV4 layer is used as a shallow-layer feature vector. However, the layer outputting the feature map used may be determined in the initial session. For example, all of CONV1 to CONV4 are trained to output shallow-layer feature vectors in the initial session to measure accuracy, and the output of the layer that produces the optimal classification result is selected as the shallow-layer feature vector.

The deep-layer feature vector output from GAP1 of the feature extraction unit 510 is input to the deep-layer feature similarity calculation unit 532a.

The shallow-layer feature vector output from GAP2 of the feature extraction unit 510 is input to the shallow-layer feature similarity calculation unit 532b.

Since the configurations of the deep-layer feature similarity calculation unit 532a and the shallow-layer feature similarity unit 532b are identical, they are collectively described as the feature similarity calculation unit 532.

The feature similarity calculation unit 532 has a weight matrix of a linear layer (fully connected layer) for deriving the cosine similarity. The weight matrix includes weights of (D×NC) dimensions. D denotes a weight vector having the same number of dimensions as the feature vector input to the linear layer. In the case of the deep-layer feature similarity calculation unit, D=512, and, in the case of the shallow-layer feature similarity calculation unit, D=256. NC denotes the number of classes. In this example, NC is assumed to be 100, which is the sum of the base classes and the incremental classes. NC can be equal to or more than the sum of the base classes and the incremental classes.

The input feature vector is normalized, and the normalized feature vector is input to the linear layer. In this process, the weight vector of the linear layer is also normalized. As a result, a cosine similarity of NC dimensions between the feature vector and the weight vector of each class is derived. By normalizing the feature vector and calculating the cosine similarity, intraclass variance can be suppressed and classification accuracy can be improved.

The deep-layer feature similarity calculation unit 532a calculates a deep-layer cosine similarity from the input deep-layer feature vector and the deep-layer weight vector of each class and outputs the deep-layer cosine similarity to the deep-layer similarity scaling unit 540a (S511a).

The deep-layer similarity scaling unit 540a scales the input deep-layer cosine similarity by a factor of $\alpha$ with a deep-layer learning parameter and outputs the deep-layer cosine similarity (S512a).

The shallow-layer feature similarity calculation unit 532b calculates the shallow-layer cosine similarity from the input shallow-layer feature vector and the shallow-layer weight vector of each class and outputs the shallow-layer cosine similarity to the shallow-layer similarity scaling unit 540b (S511b).

The shallow-layer similarity scaling unit 540b scales the input shallow-layer cosine similarity by a factor of $\alpha$ with a shallow-layer learning parameter and outputs the shallow-layer cosine similarity (S512b).

In this example, scaling is performed by using the same value $\alpha$ for the deep-layer learning parameter and the shallow-layer learning parameter, but scaling may be performed with different values $\alpha 1$ and $\alpha 2$.

The deep-layer loss computation unit 552a calculates a deep-layer cross-entropy loss, which is a loss defined between the deep-layer cosine similarity and the correct answer label (correct answer class) of the input image (S513a).

The shallow-layer loss computation unit 552b calculates a shallow-layer cross-entropy loss, which is a loss defined between the shallow-layer cosine similarity and the correct answer label (correct answer class) of the input image (S513b).

The weighted loss addition unit 554 calculates a total cross-entropy loss L by calculating a weighted sum of the deep-layer cross-entropy loss Ld and the shallow-layer cross-entropy loss Ls (S514). In this case, $\lambda$ is a predetermined value from 0 to 1 and is. For example, A=0.2. $\lambda$=0.2 is used here, but a determination as to which value from 0 to 1 should be used may, for example, be made in the initial session. For example, all values of $\lambda$ from 0 to 1 in increments of 0.05 may be learned in the initial session to measure accuracy, and the value that produces the optimum classification result may be selected as A. In such a configuration, the initial session may be performed in an offline process, and the incremental session may be performed in an online process.

$$L = (1-\lambda)*Ld+\lambda*Ls$$

The optimization unit 556 optimizes the weight parameter of the convolutional layer of the feature extraction unit 510 and the weight matrix of the feature similarity calculation unit 532 by backpropagation by using an optimization method such as stochastic gradient descent (SGD) and Adam in such a manner as to minimize the total cross-entropy loss (S515). The feature similarity calculation unit 532 is the classification unit 530 in substance.

When learning (epoch) is completed, the average deep-layer feature calculation unit 520a calculates an average deep-layer feature matrix, and the average shallow-layer feature calculation unit 520b calculates an average shallow-layer feature matrix (S516).

The average deep-layer feature calculation unit 520a replaces the weight matrix of the deep-layer feature similarity calculation unit 532a with the average deep-layer feature matrix (S517a).

The average shallow-layer feature calculation unit 520b replaces the weight matrix of the shallow-layer feature similarity calculation unit 532b with the average shallow-layer feature matrix (S517b).

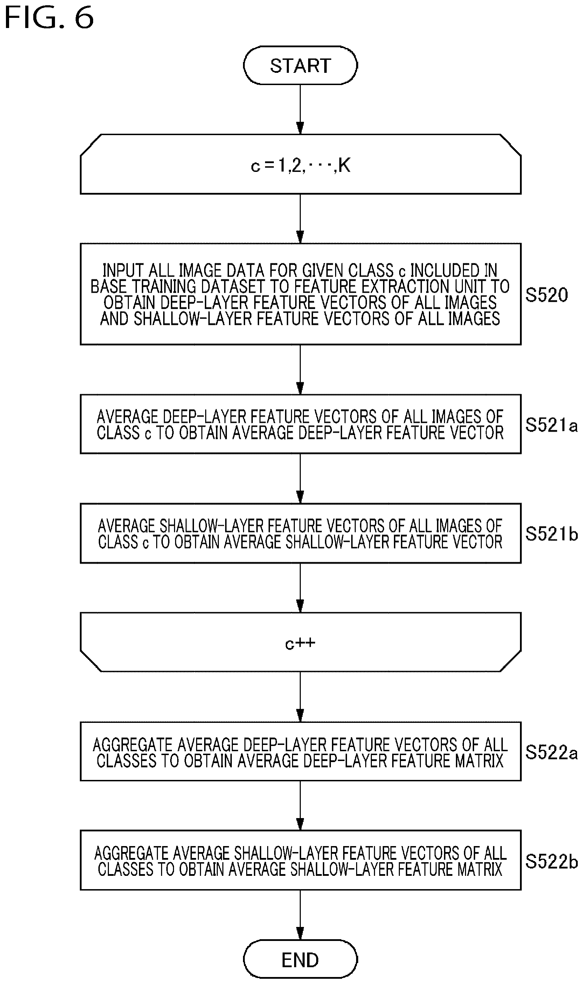

Fig. 6 is a flowchart illustrating a method of calculating the average deep-layer feature matrix and the average shallow-layer feature matrix. A description will be given of a method of calculating the average deep-layer feature matrix and the average shallow-layer feature matrix by the average deep-layer feature calculation unit 520a and the average shallow-layer feature calculation unit 520b.

It is assumed that the number of base classes is K. Given c=1, 2, ..., K, the average deep-layer feature vector and the average shallow-layer feature vector are calculated for each class. All image data for a given class c included in the base training dataset is input to the feature extraction unit 510, and the deep-layer feature vectors of all images and the shallow-layer feature vectors of all images are calculated to obtain the deep-layer feature vectors of all images and the shallow-layer feature vectors of all images thus calculated (S520).

All deep-layer feature vectors for a given class c are averaged to obtain the average deep-layer feature vector (S521a).

All shallow-layer feature vectors for a given class c are averaged to obtain the average shallow-layer feature vector (S521b).

The average deep-layer feature vectors of all classes are aggregated to obtain the average deep-layer feature matrix (S522a).

The average shallow-layer feature vectors of all classes are aggregated to obtain the average shallow-layer feature matrix (S522b).

In this example, the average deep-layer feature vectors of all classes are aggregated into the average deep-layer feature matrix of ($D \times NC$) dimensions, and the weight matrix of the deep-layer feature similarity calculation unit 532a is replaced with the average deep-layer feature matrix. Further, the average shallow-layer feature vectors of all classes are aggregated into the average shallow-layer feature matrix, and the weight matrix of the shallow-layer feature similarity calculation unit 532b is replaced with the average shallow-layer feature matrix.

The above feature is non-limiting, and the weight matrix of the deep-layer feature similarity calculation unit may be replaced with the average deep-layer feature vector for selected classes. Similarly, the weight matrix of the shallow-layer feature similarity calculation unit may be replaced with the average shallow-layer feature vector for selected classes.

In this way, a classifier that does not depend on a learning process such as batch size can be obtained, by using the average deep-layer feature matrix and the average shallow-layer feature matrix obtained by using the feature extraction unit 510 that is trained by considering the entire image and a part of the image, as the weight matrix of the deep-layer feature similarity calculation unit 532a and the weight matrix of the shallow-layer feature similarity calculation unit 532b, respectively. The calculation of the average deep-layer feature matrix and the average shallow-layer feature matrix does not depend on the data amount and can be used in the case of both small and big data.

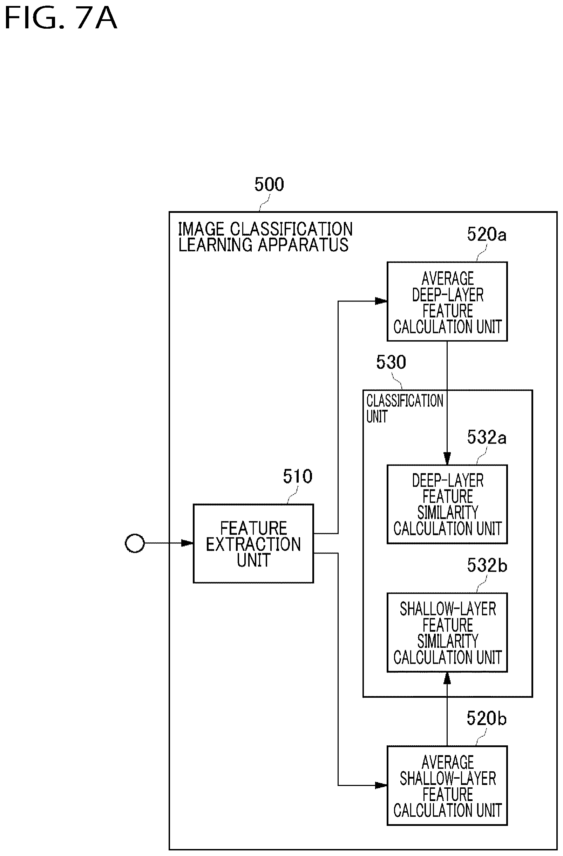

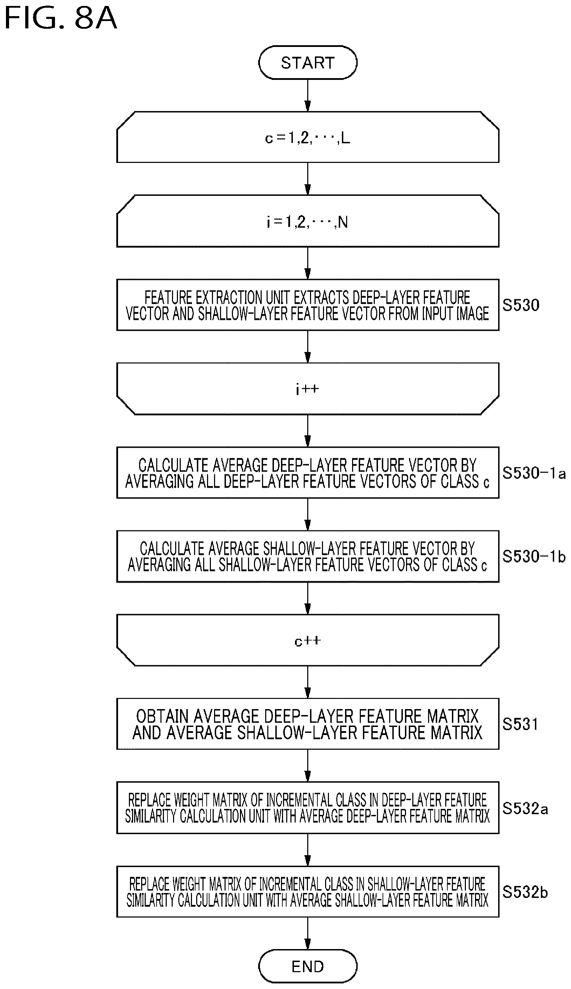

Fig. 7A shows an example of a configuration related to incremental class learning by the image classification learning apparatus 500. Fig. 8A is a flowchart illustrating a detailed operation of the image classification learning apparatus 500 in an example of incremental class learning using an incremental dataset. The operation of incremental class learning by the image classification learning apparatus 500 will be described in detail with reference to Fig. 7A and Fig. 8A.

The feature extraction unit 510 has the same configuration and the same parameter as the feature extraction unit 510 obtained in base class learning.

It is given here that the number of incremental classes is denoted by L, and the incremental class c (c=1,2, ... L) has N image data items (i=1, 2, ..., N). When N image data items of the incremental class c are input to the feature extraction unit 510, the deep-layer feature vector and the shallow-layer feature vector are extracted for each image data item and are output to the average deep-layer feature calculation unit 520a and the average shallow-layer feature calculation unit 520b, respectively (S530).

The average deep-layer feature calculation unit 520a calculates the average deep-layer feature vector by averaging the deep-layer feature vectors output from the feature extraction unit 510 (S530-1a). The average shallow-layer feature calculation unit 520b calculates the average shallow-layer feature vector by averaging the shallow-layer feature vectors output from the feature extraction unit 510 (S530-1b).

The average deep-layer feature calculation unit 520a aggregates the average deep-layer feature vectors of the incremental classes to obtain the average deep-layer feature matrix of the incremental class, and the average shallow-layer feature calculation unit 520b aggregates the average shallow-layer feature vectors of the incremental classes to obtain the average shallow-layer feature matrix (S531).

The weight matrix of the incremental class in the deep-layer feature similarity calculation unit 532a is replaced with the average deep-layer feature matrix (S532a).

The weight matrix of the incremental class in the shallow-layer feature similarity calculation unit 532b is replaced with the average shallow-layer feature matrix (S532b).

As described above, there is no need to learn the image data for the incremental class, and the classification unit adapted to incremental learning can be generated simply by calculating the average deep-layer feature vector and the average shallow-layer feature vector of the image data for the incremental class and substituting the weight matrix for those average feature vectors. Of course, it is not necessary to use all the image data for the base class and the incremental class to calculate the average deep-layer feature vector, but only a part of the image data may be used.

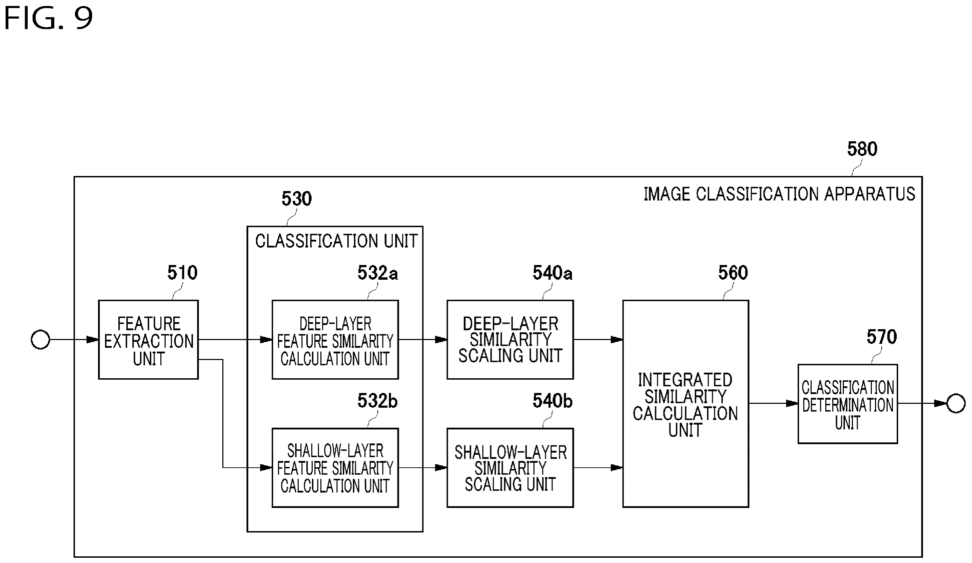

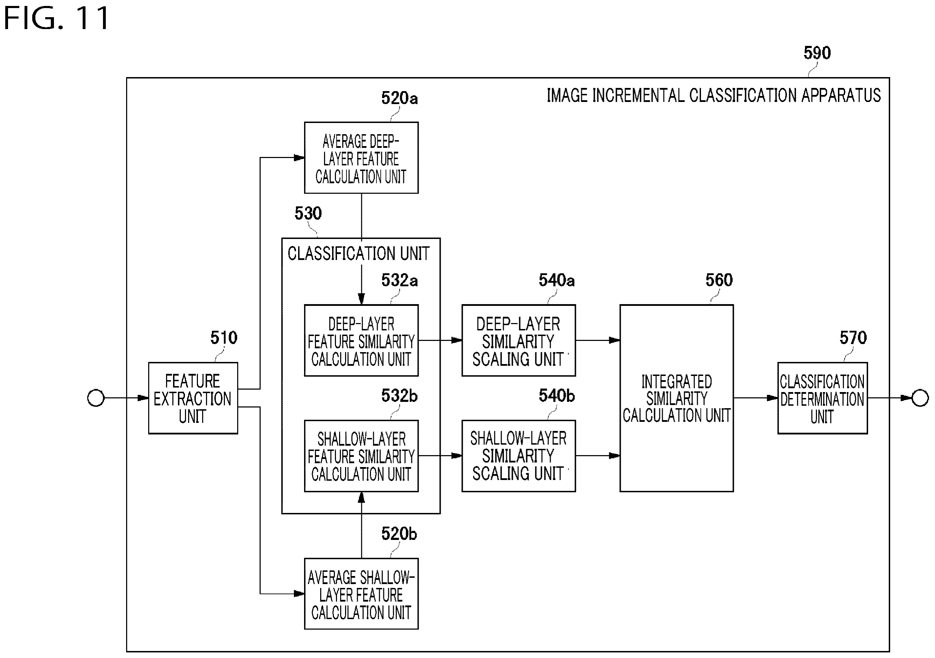

The weight matrix of the deep-layer feature similarity calculation unit 532a and the weight matrix of the shallow-layer feature similarity calculation unit 532b thus generated may be substituted for the weight matrix of the deep-layer feature similarity calculation unit 532a and weight matrix of the shallow-layer feature similarity calculation unit 532b in the image classification apparatus 580 of Fig. 9 and the image incremental classification apparatus 590 of Fig. 11.

In this example, the feature extraction unit 510 having the same configuration and the same parameter as the feature extraction unit 510 obtained in base class learning is used for base class learning. If there is no need for base class classification, it is not necessary to use the same configuration and the same parameter as the feature extraction unit 510 obtained in base class learning, and any parameter can be used as long as the feature extraction unit 510 has been trained and includes multiple layers.

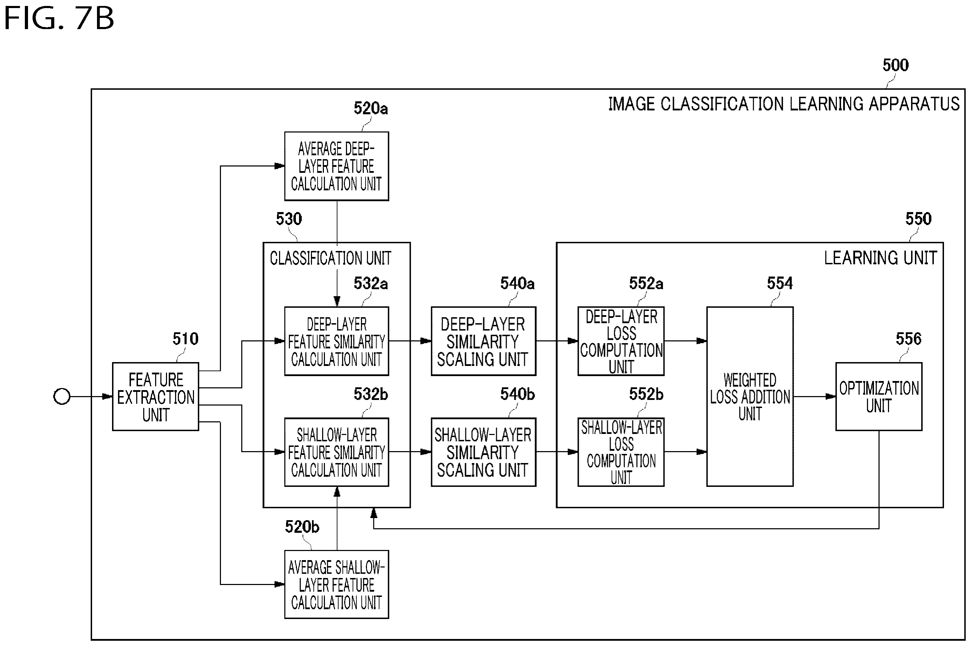

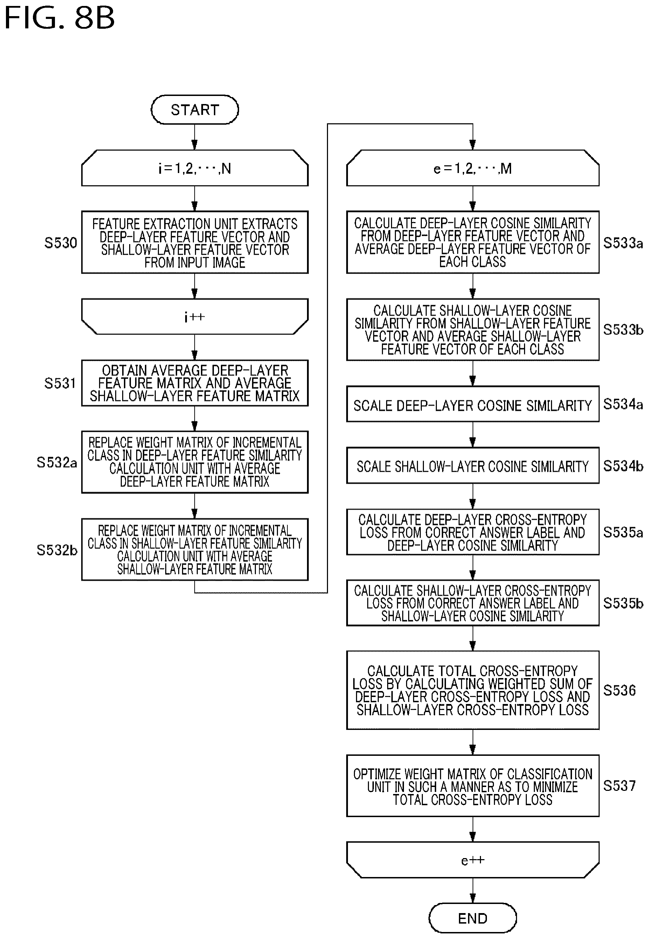

Fig. 7B shows a further example of a configuration related to incremental class learning by the image classification learning apparatus 500. Fig. 8B is a flowchart illustrating a detailed operation of the image classification learning apparatus 500 in a further example of incremental class learning using an incremental dataset. A further example of the operation of incremental class learning by the image classification learning apparatus 500 will be described with reference to Fig. 7B and 8B.

The feature extraction unit 510 has the same configuration and the same parameter as the feature extraction unit 510 obtained in base class learning.

N (i=1, 2, ..., N) image data items for the incremental class are input to the feature extraction unit 510, and the feature extraction unit 510 extracts the deep-layer feature vector and the shallow-layer feature vector for each image data item (S530).

The average deep-layer feature vectors of the incremental classes are aggregated to obtain the average deep-layer feature matrix, and the average shallow-layer feature vectors of the incremental classes are aggregated to obtain the average shallow-layer feature matrix (S531).

The weight matrix of the incremental class in the deep-layer feature similarity calculation unit 532a is replaced with the average deep-layer feature matrix obtained in S531 (S532a).

The weight matrix of the incremental class in the shallow-layer feature similarity calculation unit 532b is replaced with the average shallow-layer feature matrix obtained in S531 (S532b).

N (i=1, 2, ..., N) image data items for the incremental class are input to the feature extraction unit 510 repeatedly in M (e=1, 2, ..., M) epochs. It is assumed that the number of epochs is 30.

The deep-layer feature similarity calculation unit 532a calculates a deep-layer cosine similarity from the input deep-layer feature vector and the average deep-layer feature vector of each class and outputs the deep-layer cosine similarity to the deep-layer similarity scaling unit 540a (S533a).

The shallow-layer feature similarity calculation unit 532b calculates a shallow-layer cosine similarity from the input shallow-layer feature vector and the average shallow-layer feature vector of each class and outputs the shallow-layer cosine similarity to the shallow-layer similarity scaling unit 540b (S533b).

The deep-layer similarity scaling unit 540a scales the input deep-layer cosine similarity by a factor of $\alpha$ with a deep learning parameter and outputs the deep-layer cosine similarity (S534a).

The shallow-layer similarity scaling unit 540b scales the input shallow-layer cosine similarity by a factor of $\alpha$ with a shallow-layer learning parameter and outputs the shallow-layer cosine similarity (S534b).

The deep-layer loss computation unit 552a calculates a deep-layer cross-entropy loss, which is a loss defined between the deep-layer cosine similarity and the correct answer label (correct answer class) of the input image (S535a).

The shallow-layer loss computation unit 552b calculates a shallow-layer cross-entropy loss, which is a loss defined between the shallow-layer cosine similarity and the correct answer label (correct answer class) of the input image (S535b).

The weighted loss addition unit 554 calculates a total cross-entropy loss L by calculating a weighted sum of the deep-layer cross-entropy loss Ld and the shallow-layer cross-entropy loss Ls (S536). In this example, $\lambda$ denotes a predetermined value from 0 to 1. For example, A=0.2.

$$L=(1-\lambda)*Ld+\lambda*Ls$$

The optimization unit 556 optimizes the weight matrix of the feature similarity calculation unit 532 by backpropagation by using an optimization method such as stochastic gradient descent (SGD) and Adam in such a manner as to minimize the total cross-entropy loss (S537).

The learning rate used in incremental class learning is set to be smaller than the learning rate used in base class learning. Also, the number of epochs used in incremental class learning is set to be smaller than the number of epochs in base class learning.

As described above, the classification unit 530 adapted to incremental learning can be generated simply by calculating the average feature vector of the image data for the incremental class, substituting the weight matrix of the feature similarity calculation unit 532 for the average feature vector, and then performing fine-tuning (adjustment learning). This is equivalent to training the weight matrix of the feature similarity calculation unit 532 with its initial value set to the average feature vector. This makes it possible to obtain a more proper weight vector than the average feature vector.

It is described here that both the weight matrix of the incremental class in the deep-layer feature similarity calculation unit 532a and the weight matrix of the incremental class in the shallow-layer feature similarity calculation unit 532b are replaced with the average feature vector and then fine-tuned, but only one of the weight matrices may be fine-tuned.

Further, both the weight matrix of the incremental class in the deep-layer feature similarity calculation unit 532a and the weight matrix of the incremental class in the shallow-layer feature similarity calculation unit 532b are replaced with the average feature vector, but only one of the weight matrices may be replaced with the average feature vector. In the case the weight matrix is not replaced with the average feature vector, the weight matrix of the incremental class is, for example, initialized by random values.

As described above, the learning tendency of the deep-layer feature similarity calculation unit 532a and the shallow-layer feature similarity calculation unit 532b can be changed and the possibility of improving the accuracy by the combination can be increased, by changing the learning characteristics of the deep-layer feature similarity calculation unit 532a and the shallow-layer feature similarity calculation unit 532b.

The weight matrix of the deep-layer feature similarity calculation unit 532a and the weight matrix of the shallow-layer feature similarity calculation unit 532b thus generated may be substituted for the weight matrix of the deep-layer feature similarity calculation unit 532a and weight matrix of the shallow-layer feature similarity calculation unit 532b in the image classification apparatus 580 of Fig. 9 and the image incremental classification apparatus 590 of Fig. 11.

In this example, the feature extraction unit 510 having the same configuration and the same parameter as the feature extraction unit 510 obtained in base class learning is used for base class learning. If there is no need for base class classification, it is not necessary to use the same configuration and the same parameter as the feature extraction unit 510 obtained in base class learning, and any parameter can be used as long as the feature extraction unit 510 has been trained and includes multiple layers.

As described above, the feature of an image can be represented by using a high-resolution average feature vector even in the case of an image for which it is impossible to represent the feature with a low-resolution average feature vector, by using the average feature vector as the weight vector at multiple resolutions, namely the deep layer (low resolution) and the shallow layer (high resolution).

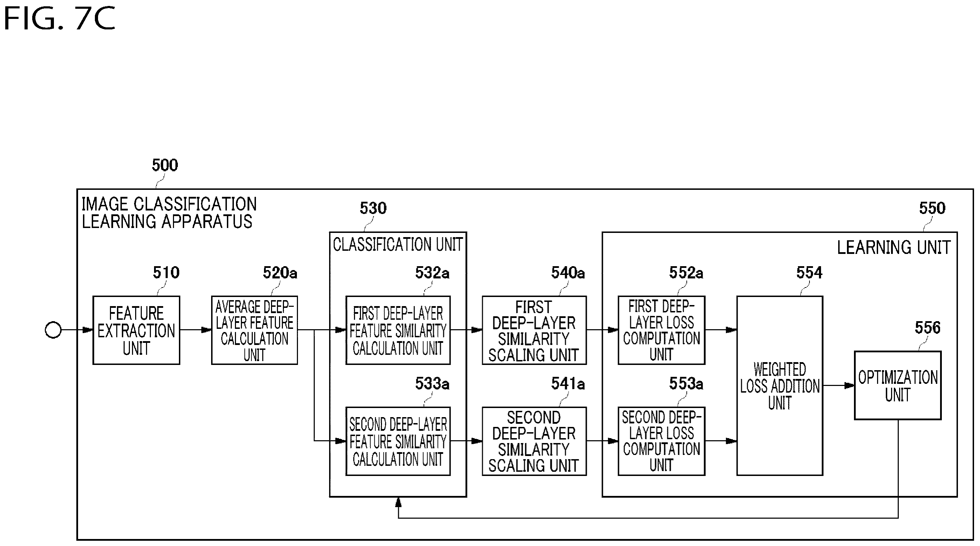

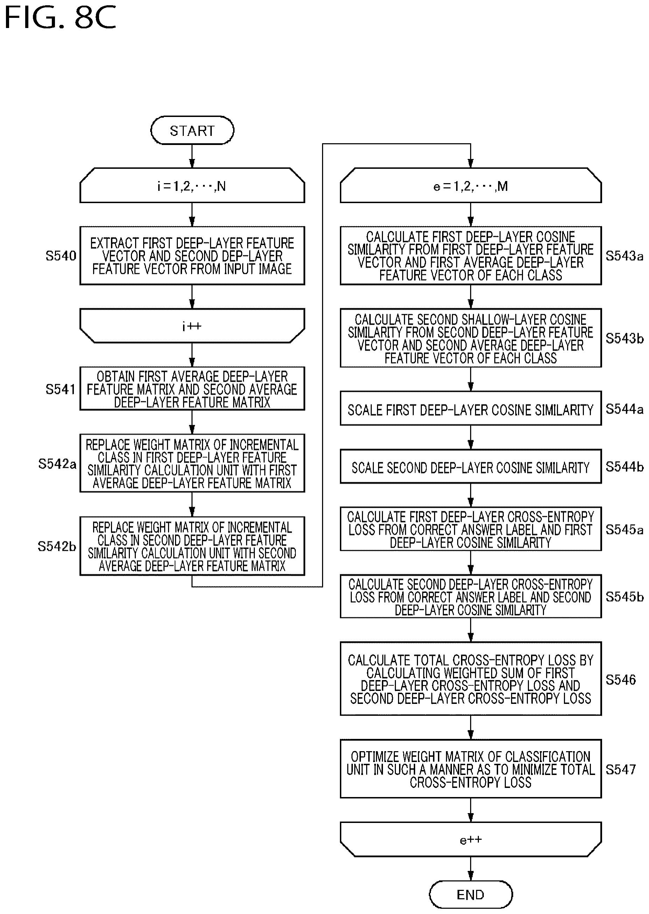

Fig. 7C shows a still further example of a configuration related to incremental class learning by the image classification learning apparatus 500. Fig. 8C is a flowchart illustrating a detailed operation of the image classification learning apparatus 500 in a still further example of incremental class learning using an incremental dataset. The still further example of the operation of incremental learning by the image classification learning apparatus 500 will be described with reference to Fig. 7C and Fig. 8C.

In this case, the average feature vector of multiple groups of the same resolution is used instead of using the average feature vector of multiple resolutions, namely the deep layer (low resolution) and the shallow layer (high resolution). In this case, an image of a given class is divided into multiple groups, and multiple average feature vectors are obtained by calculating the average feature vector for each group. When an image of a given class is divided into multiple groups, the image may be randomly divided. Alternatively, the average feature vector adapted to given characteristics can be calculated by classifying the image based on predetermined characteristics, using principal component analysis, etc.

The feature extraction unit 510 has the same configuration and the same parameter as the feature extraction unit 510 obtained in base class learning.

A description will be given of a case of dividing the image into two groups. N (i=1, 2, ..., N) image data items for the incremental class divided into two groups are input to the feature extraction unit 510, and the feature extraction unit 510 extracts the first deep-layer feature vector and the second deep-layer feature vector for each image data item (S540).

The first average deep-layer feature vectors of the incremental class of the first group are aggregated to obtain the first average deep-layer feature matrix, and the second average deep-layer feature vectors of the incremental class of the second group are aggregated to obtain the second average deep-layer feature matrix (S541).

The weight matrix of the incremental class in the first deep-layer feature similarity calculation unit 532a is replaced with the first average deep-layer feature matrix (S542a).

The weight matrix of the incremental class in the second deep-layer feature similarity calculation unit 533a is replaced with the second average deep-layer feature matrix (S542b).

N (i=1, 2, ..., N) image data items for the incremental class divided into two groups are input to the feature extraction unit 510 repeatedly in M (e=1, 2, ..., M) epochs. It is assumed that the number of epochs is 30.

The first deep-layer feature similarity calculation unit 532a calculates a first deep-layer cosine similarity from the input first deep-layer feature vector and the first average deep-layer feature vector of each class and outputs first deep-layer cosine similarity to the first deep-layer similarity scaling unit 540a (S543a).

The second deep-layer feature similarity calculation unit 533a calculates a second deep-layer cosine similarity from the input second deep-layer feature vector and the second average deep-layer feature vector of each class and outputs the second deep-layer cosine similarity to the second deep-layer similarity scaling unit 541a (S543b).

The first deep-layer similarity scaling unit 540a scales the input first deep-layer cosine similarity by a factor of $\alpha$ with a first deep-layer learning parameter and outputs the first deep-layer cosine similarity (S544a).

The second deep-layer similarity scaling unit 541a scales the input second deep-layer cosine similarity by a factor of $\alpha$ with a second deep-layer learning parameter and outputs the second deep-layer cosine similarity (S544b).

The first deep-layer loss computation unit 552a calculates a first deep-layer cross-entropy loss, which is a loss defined between the first deep-layer cosine similarity and the correct answer label (correct answer class) of the input image (S545a).

The second deep-layer loss computation unit 553a calculates a second deep-layer cross-entropy loss, which is a loss defined between the second deep-layer cosine similarity and the correct answer label (correct answer class) of the input image (S545b).

The weighted loss addition unit 554 calculates a total cross-entropy loss L by calculating a weighted sum of the first deep-layer cross-entropy loss Ld1 and the second deep-layer cross-entropy loss Ld2 (S546). In this example, $\lambda$ denotes a predetermined value from 0 to 1.

$$L=(1-\lambda)*Ld1+\lambda*Ld2$$

The optimization unit 556 optimizes the weight matrix of the feature similarity calculation unit 532 by backpropagation by using an optimization method such as stochastic gradient descent (SGD) and Adam in such a manner as to minimize the total cross-entropy loss (S547).

As described above, the feature of an image can be represented by using the average feature vectors of multiple groups even in the case of an image for which it is impossible to represent the feature with a single average feature vector, by using average feature vector of multiple groups as the weight vector. It is assumed here that the feature extraction unit 510 extracts the deep-layer feature vector, but the feature extraction unit 510 may extract the shallow-layer feature vector.

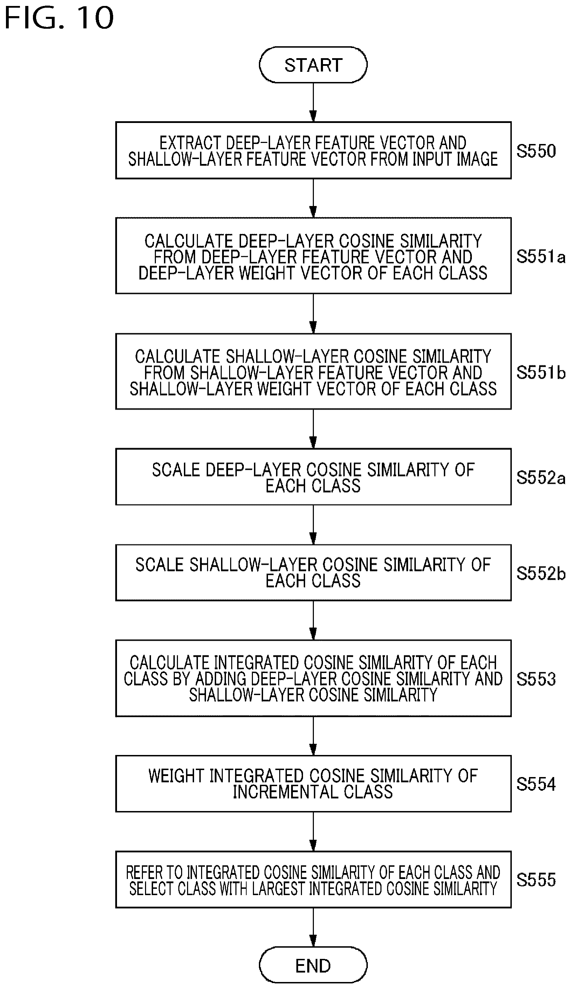

Fig. 9 shows a configuration of the image classification apparatus 580. The image classification apparatus 580 of Fig. 9 is comprised of the components necessary for classification by the image classification learning apparatus 500. Fig. 10 is a flowchart illustrating a detailed operation of the image classification apparatus 580. The classification operation of the image classification apparatus 580 will be described in detail with reference to Fig. 9 and Fig. 10.

The feature extraction unit 510 has the same configuration and the same parameter as the feature extraction unit obtained in base class learning.

It is assumed that, of the weight matrices of the deep-layer feature similarity calculation unit 532a, the weight matrix of the base class is replaced with the average deep-layer feature matrix calculated by the calculation method shown in Fig. 6. It is assumed that, of the weight matrices of the deep-layer feature similarity calculation unit 532a, the weight matrix of the incremental class is replaced with the average deep-layer feature matrix calculated by the calculation method shown in Fig. 7A and Fig. 8A. It is assumed that, of the weight matrices of the shallow-layer feature similarity calculation unit 532b, the weight matrix of the base class is replaced with the average shallow-layer feature matrix calculated by the calculation method shown in Fig. 6. It is assumed that, of the weight matrices of the shallow-layer feature similarity calculation unit 532b, the weight matrix of the incremental class is similarly replaced with the average shallow-layer feature matrix calculated by the calculation method shown in Fig. 7A and Fig. 8A.

When the input image is input to the feature extraction unit 510, the deep-layer feature vector and the shallow-layer feature vector are extracted (S550).

The deep-layer feature similarity calculation unit 532a calculates a deep-layer cosine similarity for each class from the input deep-layer feature vector and the deep-layer weight vector of each class in the average deep-layer feature matrix and outputs the deep-layer cosine similarity to the deep-layer similarity scaling unit 540a (S551a).

The shallow-layer feature similarity calculation unit 532b calculates a shallow-layer cosine similarity for each class from the input shallow-layer feature vector and the shallow-layer weight vector of each class in the average shallow-layer feature matrix and outputs the shallow-layer cosine similarity to the shallow-layer similarity scaling unit 540b (S551b).

The deep-layer similarity scaling unit 540a scales the input deep-layer cosine similarity by a factor of $\beta$ with a deep-layer evocation parameter and outputs the deep-layer cosine similarity of each class (S552a).

The shallow-layer similarity scaling unit 540b scales the input shallow-layer cosine similarity by a factor of $\gamma$ with a shallow-layer evocation parameter and outputs the shallow-layer cosine similarity of each class (S552b).

The integrated similarity calculation unit 560 calculates an integrated cosine similarity of each class by adding the deep-layer cosine similarity and the shallow-layer cosine similarity (S553).

The integrated similarity calculation unit 560 weights the integrated cosine similarity of the incremental class (S554). The weighting parameter will be denoted by w. If it is desired to make the accuracy of the incremental class relatively higher than the accuracy of the base class, it is defined w>1.0, and if it is desired to make the accuracy of the base class relatively higher than the accuracy of the incremental class, it is defined w<1.0. To make the base class accuracy and the incremental class accuracy equal, it is defined w=1.0.

In this example, the same parameter $\alpha$ is used in learning as the deep-layer learning parameter and the shallow-layer learning parameter, and the deep-layer evocation parameter $\beta$ and the shallow-layer evocation parameter $\gamma$ used in classification are configured to be different parameters. In general, the processing load is greater during learning than during classification. For this reason, adjustment between deep layer and shallow layer is made at the time of classification instead of learning. Of course, it may be defined that $\alpha=\beta=\gamma$, $\alpha\neq\beta=\gamma$, $\alpha=\gamma\neq\beta$, or $\alpha\neq\beta\neq\gamma$. If the processing efficiency does not pose a problem, the deep-layer learning parameter and the shallow-layer learning parameter may have different values and adjustment may be made at the time of learning.

Further, referring to Fig. 1, Fig. 3, and Fig. 9, the shallow-layer feature similarity calculation unit 532b, the shallow-layer similarity scaling unit 540b, the shallow-layer loss computation unit 552b, and the weighted loss addition unit 554 may not be provided. In this case, the deep-layer learning parameter and the deep-layer evocation parameter are set to different values such that $\alpha\neq\beta$. By setting $\alpha$ such that $\beta=1$, the scaling process at the time of classification can be eliminated. For example, the parameters are set such that $\alpha=20$, $\beta=1$ so that the learning parameter $\alpha$ is equal to or greater than the evocation parameter $\beta$. The reason for setting $\alpha$ to be larger is to increase the resolution of cosine similarity at the time of learning. At the time of classification, scaling is not necessary because the deep-layer cosine similarity that has already been learned is used, and weak scaling may be employed.

The classification determination unit 570 refers to the integrated cosine similarity of each class and selects the class with the largest integrated cosine similarity (S555).

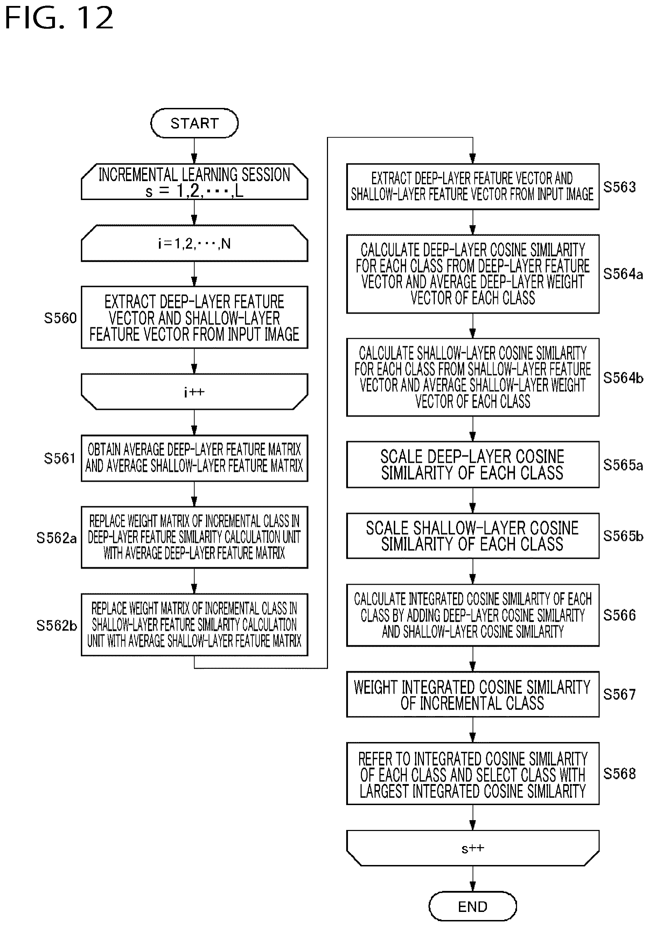

Fig. 11 shows a configuration of the image incremental classification apparatus 590. The image incremental classification apparatus 590 of Fig. 11 is a configured such that the configuration of Fig. 7A to obtain the average deep-layer feature matrix and the average shallow-layer feature matrix is added to the image classification apparatus 580 of Fig. 9. Fig. 12 is a flowchart illustrating a detailed operation of the image incremental classification apparatus 590. The operation of the incremental class classification by the image incremental classification apparatus 520 will be described in detail with reference to Fig. 11 and Fig. 12.

The feature extraction unit 510 has the same configuration and the same parameters as the feature extraction unit 510 obtained in base class learning.

The incremental learning session s is repeated L times (s=1, 2, ..., L).

N (i=1, 2, ..., N) image data items for the incremental class are input to the feature extraction unit 510, and the feature extraction unit 510 extracts the deep-layer feature vector and the shallow-layer feature vector for each image data item (S560).

The average deep-layer feature vectors of the incremental classes are aggregated to obtain the average deep-layer feature matrix, and the average shallow-layer feature vectors of the incremental classes are aggregated to obtain the average shallow-layer feature matrix (S561).

The weight matrix of the incremental class in the deep-layer feature similarity calculation unit 532a is replaced with the average deep-layer feature matrix (S562a).

The weight matrix of the incremental class in the shallow-layer feature similarity calculation unit 532b is replaced with the average shallow-layer feature matrix (S562b).

When the input image is input to the feature extraction unit 510, the deep-layer feature vector and the shallow-layer feature vector are extracted (S563).

The deep-layer feature similarity calculation unit 532a calculates a deep-layer cosine similarity for each class from the input deep-layer feature vector and the deep-layer weight vector of each class and outputs the deep-layer cosine similarity to the deep-layer similarity scaling unit 540a (S564a).

The shallow-layer feature similarity calculation unit 532b calculates a shallow-layer cosine similarity for each class from the input shallow-layer feature vector and the shallow-layer weight vector of each class and outputs the shallow-layer cosine similarity to the shallow-layer similarity scaling unit 540b (S564b).

The deep-layer similarity scaling unit 540a scales the input deep-layer cosine similarity by a factor of $\beta$ with a deep-layer evocation parameter and outputs the deep-layer cosine similarity of each class (S565a).

The shallow-layer similarity scaling unit 540b scales the input shallow-layer cosine similarity by a factor of $\gamma$ with a shallow-layer evocation parameter and outputs the shallow-layer cosine similarity of each class (S565b).

The integrated similarity calculation unit 560 calculates an integrated cosine similarity of each class by adding the deep-layer cosine similarity and the shallow-layer cosine similarity (S566). In this example, the deep-layer similarity and the shallow-layer cosine similarity are similarly added, but the calculation method is not limited to this. For example, weighted addition or multiplication may be employed.

The integrated similarity calculation unit 560 weights the integrated cosine similarity of the incremental class (S567). The weighting parameter will be denoted by w.

The classification determination unit 570 refers to the integrated cosine similarity of each class and selects the class with the largest integrated cosine similarity (S568). In this example, the integrated cosine similarity is referred to, and the class with the largest integrated cosine similarity is selected, but the selection method is not limited to this. For example, multiple high-ranking items may be selected.

This enables incremental class classification without requiring loss calculation and optimization, which impose a heavy processing load. Referring to Fig. 11, an example is shown of calculating the average deep-layer feature matrix and the average shallow-layer feature matrix for the incremental class, assuming that the detail of the base class remains unchanged. If there is a change in the detail of the base class, the average deep-layer feature matrix and the average shallow-layer feature matrix may be calculated for the base class.

Further, the deep-layer similarity scaling unit 540a, the shallow-layer similarity scaling unit 540b, the first deep-layer similarity scaling unit 540a, and the second deep-layer similarity scaling unit 541a are not essential in the respective embodiments. Either the deep-layer similarity scaling unit 540a or the shallow-layer similarity scaling unit 540b may not be provided, or neither of them is necessary. Either the first deep-layer similarity scaling unit 540a or the second deep-layer similarity scaling unit 541a may not be provided, or neither of them is necessary.

In other words, the deep-layer cosine similarity calculated by the deep-layer feature similarity calculation unit 532a is output to the deep-layer loss computation unit 552a or the integrated similarity calculation unit 560 in the absence of the deep-layer similarity scaling unit 540a. In the absence of the first deep-layer similarity scaling unit 540a, the first deep-layer cosine similarity calculated by the first deep-layer feature similarity calculation unit 532a is output to the first deep-layer loss computation unit 552a. In the absence of the shallow-layer similarity scaling unit 540b, the shallow-layer cosine similarity calculated by the shallow-layer feature similarity calculation unit 532b is output to the shallow-layer loss computation unit 552b or the integrated similarity calculation unit 560. In the absence of the second deep-layer similarity scaling unit 541a, the second deep-layer cosine similarity calculated by the second deep-layer feature similarity calculation unit 533a is output to the second deep-layer loss computation unit 553a.

The above-described various processes in the image classification learning apparatus 500, the image classification apparatus 580, the image incremental classification apparatus 590 can of course be implemented by hardware-based apparatuses such as a CPU and a memory and can also be implemented by firmware stored in a ROM (read-only memory), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

INDUSTRIAL APPLICABILITY

The present invention can be applied to image classification technology.

REFERENCE SIGNS LIST

500 image classification learning apparatus, 510 feature extraction unit, 520a average deep-layer feature calculation unit, 520b average shallow-layer feature calculation unit, 530 classification unit, 532a deep-layer feature similarity calculation unit, 532b shallow-layer feature similarity calculation unit, 540a deep-layer similarity scaling unit, 540b shallow-layer similarity scaling unit, 550 learning unit, 552a deep-layer loss computation unit, 552b shallow-layer loss computation unit, 554 weighted loss addition unit, 556 optimization unit, 560 integrated similarity calculated unit, 570 classification determination unit, 580 image classification apparatus, 590 image incremental classification apparatus

**Claims**

1. An image classification apparatus comprising:

a feature extraction unit that outputs a first feature vector of an input image and outputs a second feature vector that is a feature vector different from the first feature vector;
an averaged first feature calculation unit that calculates an averaged first feature vector by averaging first feature vectors of a given class and obtains an averaged first feature matrix by aggregating averaged first feature vectors of all classes;
an averaged second feature calculation unit that calculates an averaged second feature vector by averaging second feature vectors of a given class and obtains an averaged second feature matrix by aggregating averaged second feature vectors of all classes;
a first feature similarity calculation unit that calculates a first similarity from the first feature vector of the input image and a first weight matrix; and
a second feature similarity calculation unit that calculates a second similarity from the second feature vector of the input image and a second weight matrix,
wherein the averaged first feature calculation unit replaces the first weight matrix of the first feature similarity calculation unit with the averaged first feature matrix, and
wherein the averaged second feature calculation unit replaces the second weight matrix of the second feature similarity calculation unit with the averaged second feature matrix.

2. The image classification apparatus according to claim 1,
wherein the first feature vector and the second feature vector differ in resolution.

3. The image classification apparatus according to claim 1 or 2, further comprising:

an integrated similarity calculation unit that adds the first similarity and the second similarity and calculates an integrated similarity; and
a classification determination unit that determines a class of the input image based on the integrated similarity.

4. The image classification apparatus according to claim 1 or 2, further comprising:

a first loss computation unit that calculates a first loss from the first similarity and a correct answer label of the input image;
a second loss computation unit that calculates a second loss from the second similarity and a correct answer label of the input image;
a weighted loss addition unit that calculates a total loss by adding the first loss and the second loss; and

an optimization unit that optimizes the first weight matrix of the first feature similarity calculation unit and the second weight matrix of the second feature similarity calculation unit in such a manner as to minimize the total loss.

5. An image classification method comprising:

outputting a first feature vector of an input image and outputting a second feature vector that is a feature vector different from the first feature vector;

calculating an averaged first feature vector by averaging first feature vectors of a given class and obtaining an averaged first feature matrix by aggregating averaged first feature vectors of all classes;

calculating an averaged second feature vector by averaging second feature vectors of a given class and obtaining an averaged second feature matrix by aggregating averaged second feature vectors of all classes;

calculating a first similarity from the first feature vector of the input image and a first weight matrix; and

calculating a second similarity from the second feature vector of the input image and a second weight matrix,

wherein the calculating of the averaged first feature replaces the first weight matrix of the calculating of the first similarity with the averaged first feature matrix, and

wherein the calculating of the averaged second feature replaces the second weight matrix of the calculating of the second similarity with the averaged second feature matrix.

6. An image classification program comprising computer-implemented modules including:

a module that outputs a first feature vector of an input image and outputs a second feature vector that is a feature vector different from the first feature vector;

a module that calculates an averaged first feature vector by averaging first feature vectors of a given class and obtains an averaged first feature matrix by aggregating averaged first feature vectors of all classes;

a module that calculates an averaged second feature vector by averaging second feature vectors of a given class and obtains an averaged second feature matrix by aggregating averaged second feature vectors of all classes;

a module that calculates a first similarity from the first feature vector of the input image and a first weight matrix; and

a module that calculates a second similarity from the second feature vector of the input image and a second weight matrix,

wherein the module that calculates an averaged first feature vector replaces the first weight matrix of the module that calculates a first similarity with the averaged first feature matrix, and

wherein the module that calculates an averaged second feature vector replaces the second weight matrix of the module that calculates a second similarity with the averaged second feature matrix.

# FIG. 1

# FIG. 2

START

USE BASIC TRAINING DATA SET TO TRAIN BASE CLASS WEIGHT VECTOR OF FEATURE EXTRACTION UNIT AND CLASSIFICATION UNIT BASED ON COSINE SIMILARITY — S501

CLASSIFY BASE CLASS THAT HAS BEEN LEARNED — S502

INCREMENTAL LEARNING SESSION $s = 1,2,\cdots,L$

USE INCREMENTAL TRAINING DATA SET TO TRAIN INCREMENTAL CLASS WEIGHT VECTOR OF CLASSIFICATION UNIT BASED ON COSINE SIMILARITY — S503

CLASSIFY BASE CLASS AND INCREMENTAL CLASS THAT HAVE BEEN LEARNED — S504

s++

END

# FIG. 3

EP 4 668 208 A1

IMAGE CLASSIFICATION LEARNING APPARATUS 500

520a AVERAGE DEEP-LAYER FEATURE CALCULATION UNIT

530 CLASSIFICATION UNIT

550 LEARNING UNIT

510 FEATURE EXTRACTION UNIT

532a DEEP-LAYER FEATURE SIMILARITY CALCULATION UNIT

540a DEEP-LAYER SIMILARITY SCALING UNIT

552a DEEP-LAYER LOSS COMPUTATION UNIT

554 WEIGHTED LOSS ADDITION UNIT

556 OPTIMIZATION UNIT

532b SHALLOW-LAYER FEATURE SIMILARITY CALCULATION UNIT

540b SHALLOW-LAYER SIMILARITY SCALING UNIT

552b SHALLOW-LAYER LOSS COMPUTATION UNIT

520b AVERAGE SHALLOW-LAYER FEATURE CALCULATION UNIT

# FIG. 4

```
                    ┌─────────┐
                    │  START  │
                    └─────────┘
                         │
              ╱──────────────────────╲
              │   e = 1,2,···,M       │
              ╲──────────────────────╱
                         │
              ╱──────────────────────╲
              │   b = 1,2,···,N       │
              ╲──────────────────────╱
                         │
```

S510 — EXTRACT DEEP-LAYER FEATURE VECTOR AND SHALLOW-LAYER FEATURE VECTOR FROM INPUT IMAGE

S511a — CALCULATE DEEP-LAYER COSINE SIMILARITY FROM DEEP-LAYER FEATURE VECTOR AND DEEP-LAYER WEIGHT VECTOR OF EACH CLASS

S512a — SCALE DEEP-LAYER COSINE SIMILARITY

S511b — CALCULATE SHALLOW-LAYER COSINE SIMILARITY FROM SHALLOW-LAYER FEATURE VECTOR AND SHALLOW-LAYER WEIGHT VECTOR OF EACH CLASS

S512b — SCALE SHALLOW-LAYER COSINE SIMILARITY

S513a — CALCULATE DEEP-LAYER CROSS-ENTROPY LOSS FROM CORRECT ANSWER LABEL AND DEEP-LAYER COSINE SIMILARITY

S513b — CALCULATE SHALLOW-LAYER CROSS-ENTROPY LOSS FROM CORRECT ANSWER LABEL AND SHALLOW-LAYER COSINE SIMILARITY

S514 — CALCULATE TOTAL CROSS-ENTROPY LOSS BY CALCULATING WEIGHTED SUM OF DEEP-LAYER CROSS-ENTROPY LOSS AND SHALLOW-LAYER CROSS-ENTROPY LOSS

S515 — OPTIMIZE WEIGHT MATRIX OF FEATURE SIMILARITY CALCULATION UNIT AND FEATURE SIMILARITY CALCULATION UNIT IN SUCH A MANNER AS TO MINIMIZE TOTAL CROSS-ENTROPY LOSS

```
              ╱──────────────────────╲
              │         b++           │
              ╲──────────────────────╱
                         │
              ╱──────────────────────╲
              │         e++           │
              ╲──────────────────────╱
```

S516 — CALCULATE AVERAGE DEEP-LAYER FEATURE MATRIX AND AVERAGE SHALLOW-LAYER FEATURE MATRIX

S517a — REPLACE WEIGHT MATRIX OF DEEP-LAYER FEATURE SIMILARITY CALCULATION UNIT WITH AVERAGE DEEP-LAYER FEATURE MATRIX

S517b — REPLACE WEIGHT MATRIX OF SHALLOW-LAYER FEATURE SIMILARITY CALCULATION UNIT WITH AVERAGE SHALLOW-LAYER FEATURE MATRIX

```
                    ┌─────────┐
                    │   END   │
                    └─────────┘
```

FIG. 5

FEATURE EXTRACTION UNIT 510

Conv 1 → Conv 2 → Conv 3 → Conv 4 → Conv 5 → GAP 1 → DEEP-LAYER FEATURE VECTOR

GAP 2 → SHALLOW-LAYER FEATURE VECTOR

# FIG. 6

START

c = 1,2,···,K

INPUT ALL IMAGE DATA FOR GIVEN CLASS c INCLUDED IN BASE TRAINING DATASET TO FEATURE EXTRACTION UNIT TO OBTAIN DEEP-LAYER FEATURE VECTORS OF ALL IMAGES AND SHALLOW-LAYER FEATURE VECTORS OF ALL IMAGES — S520

AVERAGE DEEP-LAYER FEATURE VECTORS OF ALL IMAGES OF CLASS c TO OBTAIN AVERAGE DEEP-LAYER FEATURE VECTOR — S521a

AVERAGE SHALLOW-LAYER FEATURE VECTORS OF ALL IMAGES OF CLASS c TO OBTAIN AVERAGE SHALLOW-LAYER FEATURE VECTOR — S521b

c++

AGGREGATE AVERAGE DEEP-LAYER FEATURE VECTORS OF ALL CLASSES TO OBTAIN AVERAGE DEEP-LAYER FEATURE MATRIX — S522a

AGGREGATE AVERAGE SHALLOW-LAYER FEATURE VECTORS OF ALL CLASSES TO OBTAIN AVERAGE SHALLOW-LAYER FEATURE MATRIX — S522b

END

# FIG. 7A

500

IMAGE CLASSIFICATION
LEARNING APPARATUS

520a

AVERAGE
DEEP-LAYER
FEATURE
CALCULATION UNIT

530

CLASSIFICATION
UNIT

532a

DEEP-LAYER
FEATURE
SIMILARITY
CALCULATION UNIT

510

FEATURE
EXTRACTION
UNIT

532b

SHALLOW-LAYER
FEATURE
SIMILARITY
CALCULATION UNIT

520b

AVERAGE
SHALLOW-LAYER
FEATURE
CALCULATION UNIT

# FIG. 7B

**500**

IMAGE CLASSIFICATION LEARNING APPARATUS

**520a** AVERAGE DEEP-LAYER FEATURE CALCULATION UNIT

**530** CLASSIFICATION UNIT

**550** LEARNING UNIT

**510** FEATURE EXTRACTION UNIT

**532a** DEEP-LAYER FEATURE SIMILARITY CALCULATION UNIT

**540a** DEEP-LAYER SIMILARITY SCALING UNIT

**552a** DEEP-LAYER LOSS COMPUTATION UNIT

**554** WEIGHTED LOSS ADDITION UNIT

**556** OPTIMIZATION UNIT

**532b** SHALLOW-LAYER FEATURE SIMILARITY CALCULATION UNIT

**540b** SHALLOW-LAYER SIMILARITY SCALING UNIT

**552b** SHALLOW-LAYER LOSS COMPUTATION UNIT

**520b** AVERAGE SHALLOW-LAYER FEATURE CALCULATION UNIT

EP 4 668 208 A1

# FIG. 7C

EP 4 668 208 A1

## FIG. 8A

START

c = 1, 2, ···, L

i = 1, 2, ···, N

FEATURE EXTRACTION UNIT EXTRACTS DEEP-LAYER FEATURE VECTOR AND SHALLOW-LAYER FEATURE VECTOR FROM INPUT IMAGE — S530

i++

CALCULATE AVERAGE DEEP-LAYER FEATURE VECTOR BY AVERAGING ALL DEEP-LAYER FEATURE VECTORS OF CLASS c — S530-1a

CALCULATE AVERAGE SHALLOW-LAYER FEATURE VECTOR BY AVERAGING ALL SHALLOW-LAYER FEATURE VECTORS OF CLASS c — S530-1b

c++

OBTAIN AVERAGE DEEP-LAYER FEATURE MATRIX AND AVERAGE SHALLOW-LAYER FEATURE MATRIX — S531

REPLACE WEIGHT MATRIX OF INCREMENTAL CLASS IN DEEP-LAYER FEATURE SIMILARITY CALCULATION UNIT WITH AVERAGE DEEP-LAYER FEATURE MATRIX — S532a

REPLACE WEIGHT MATRIX OF INCREMENTAL CLASS IN SHALLOW-LAYER FEATURE SIMILARITY CALCULATION UNIT WITH AVERAGE SHALLOW-LAYER FEATURE MATRIX — S532b

END

# FIG. 8B

START

i = 1,2,···,N

S530 FEATURE EXTRACTION UNIT EXTRACTS DEEP-LAYER FEATURE VECTOR AND SHALLOW-LAYER FEATURE VECTOR FROM INPUT IMAGE

i++

S531 OBTAIN AVERAGE DEEP-LAYER FEATURE MATRIX AND AVERAGE SHALLOW-LAYER FEATURE MATRIX

S532a REPLACE WEIGHT MATRIX OF INCREMENTAL CLASS IN DEEP-LAYER FEATURE SIMILARITY CALCULATION UNIT WITH AVERAGE DEEP-LAYER FEATURE MATRIX

S532b REPLACE WEIGHT MATRIX OF INCREMENTAL CLASS IN SHALLOW-LAYER FEATURE SIMILARITY CALCULATION UNIT WITH AVERAGE SHALLOW-LAYER FEATURE MATRIX

e = 1,2,···,M

S533a CALCULATE DEEP-LAYER COSINE SIMILARITY FROM DEEP-LAYER FEATURE VECTOR AND AVERAGE DEEP-LAYER FEATURE VECTOR OF EACH CLASS

S533b CALCULATE SHALLOW-LAYER COSINE SIMILARITY FROM SHALLOW-LAYER FEATURE VECTOR AND AVERAGE SHALLOW-LAYER FEATURE VECTOR OF EACH CLASS

S534a SCALE DEEP-LAYER COSINE SIMILARITY

S534b SCALE SHALLOW-LAYER COSINE SIMILARITY

S535a CALCULATE DEEP-LAYER CROSS-ENTROPY LOSS FROM CORRECT ANSWER LABEL AND DEEP-LAYER COSINE SIMILARITY

S535b CALCULATE SHALLOW-LAYER CROSS-ENTROPY LOSS FROM CORRECT ANSWER LABEL AND SHALLOW-LAYER COSINE SIMILARITY

S536 CALCULATE TOTAL CROSS-ENTROPY LOSS BY CALCULATING WEIGHTED SUM OF DEEP-LAYER CROSS-ENTROPY LOSS AND SHALLOW-LAYER CROSS-ENTROPY LOSS

S537 OPTIMIZE WEIGHT MATRIX OF CLASSIFICATION UNIT IN SUCH A MANNER AS TO MINIMIZE TOTAL CROSS-ENTROPY LOSS

e++

END

# FIG. 8C

START

i = 1,2,···,N

S540 | EXTRACT FIRST DEEP-LAYER FEATURE VECTOR AND SECOND DEP-LAYER FEATURE VECTOR FROM INPUT IMAGE

i++

S541 | OBTAIN FIRST AVERAGE DEEP-LAYER FEATURE MATRIX AND SECOND AVERAGE DEEP-LAYER FEATURE MATRIX

S542a | REPLACE WEIGHT MATRIX OF INCREMENTAL CLASS IN FIRST DEEP-LAYER FEATURE SIMILARITY CALCULATION UNIT WITH FIRST AVERAGE DEEP-LAYER FEATURE MATRIX

S542b | REPLACE WEIGHT MATRIX OF INCREMENTAL CLASS IN SECOND DEEP-LAYER FEATURE SIMILARITY CALCULATION UNIT WITH SECOND AVERAGE DEEP-LAYER FEATURE MATRIX

e = 1,2,···,M

CALCULATE FIRST DEEP-LAYER COSINE SIMILARITY FROM FIRST DEEP-LAYER FEATURE VECTOR AND FIRST AVERAGE DEEP-LAYER FEATURE VECTOR OF EACH CLASS | S543a

CALCULATE SECOND SHALLOW-LAYER COSINE SIMILARITY FROM SECOND DEEP-LAYER FEATURE VECTOR AND SECOND AVERAGE DEEP-LAYER FEATURE VECTOR OF EACH CLASS | S543b

SCALE FIRST DEEP-LAYER COSINE SIMILARITY | S544a

SCALE SECOND DEEP-LAYER COSINE SIMILARITY | S544b

CALCULATE FIRST DEEP-LAYER CROSS-ENTROPY LOSS FROM CORRECT ANSWER LABEL AND FIRST DEEP-LAYER COSINE SIMILARITY | S545a

CALCULATE SECOND DEEP-LAYER CROSS-ENTROPY LOSS FROM CORRECT ANSWER LABEL AND SECOND DEEP-LAYER COSINE SIMILARITY | S545b

CALCULATE TOTAL CROSS-ENTROPY LOSS BY CALCULATING WEIGHTED SUM OF FIRST DEEP-LAYER CROSS-ENTROPY LOSS AND SECOND DEEP-LAYER CROSS-ENTROPY LOSS | S546

OPTIMIZE WEIGHT MATRIX OF CLASSIFICATION UNIT IN SUCH A MANNER AS TO MINIMIZE TOTAL CROSS-ENTROPY LOSS | S547

e++

END

FIG. 9

EP 4 668 208 A1

## FIG. 10

START

EXTRACT DEEP-LAYER FEATURE VECTOR AND SHALLOW-LAYER FEATURE VECTOR FROM INPUT IMAGE — S550

CALCULATE DEEP-LAYER COSINE SIMILARITY FROM DEEP-LAYER FEATURE VECTOR AND DEEP-LAYER WEIGHT VECTOR OF EACH CLASS — S551a

CALCULATE SHALLOW-LAYER COSINE SIMILARITY FROM SHALLOW-LAYER FEATURE VECTOR AND SHALLOW-LAYER WEIGHT VECTOR OF EACH CLASS — S551b

SCALE DEEP-LAYER COSINE SIMILARITY OF EACH CLASS — S552a

SCALE SHALLOW-LAYER COSINE SIMILARITY OF EACH CLASS — S552b

CALCULATE INTEGRATED COSINE SIMILARITY OF EACH CLASS BY ADDING DEEP-LAYER COSINE SIMILARITY AND SHALLOW-LAYER COSINE SIMILARITY — S553

WEIGHT INTEGRATED COSINE SIMILARITY OF INCREMENTAL CLASS — S554

REFER TO INTEGRATED COSINE SIMILARITY OF EACH CLASS AND SELECT CLASS WITH LARGEST INTEGRATED COSINE SIMILARITY — S555

END

FIG. 11

IMAGE INCREMENTAL CLASSIFICATION APPARATUS  590

510 FEATURE EXTRACTION UNIT

520a AVERAGE DEEP-LAYER FEATURE CALCULATION UNIT

520b AVERAGE SHALLOW-LAYER FEATURE CALCULATION UNIT

530 CLASSIFICATION UNIT

532a DEEP-LAYER FEATURE SIMILARITY CALCULATION UNIT

532b SHALLOW-LAYER FEATURE SIMILARITY CALCULATION UNIT

540a DEEP-LAYER SIMILARITY SCALING UNIT

540b SHALLOW-LAYER SIMILARITY SCALING UNIT

560 INTEGRATED SIMILARITY CALCULATION UNIT

570 CLASSIFICATION DETERMINATION UNIT

# FIG. 12

START

INCREMENTAL LEARNING SESSION
s = 1,2,···,L

i = 1,2,···,N

S560 | EXTRACT DEEP-LAYER FEATURE VECTOR AND SHALLOW-LAYER FEATURE VECTOR FROM INPUT IMAGE

i++

S561 | OBTAIN AVERAGE DEEP-LAYER FEATURE MATRIX AND AVERAGE SHALLOW-LAYER FEATURE MATRIX

S562a | REPLACE WEIGHT MATRIX OF INCREMENTAL CLASS IN DEEP-LAYER FEATURE SIMILARITY CALCULATION UNIT WITH AVERAGE DEEP-LAYER FEATURE MATRIX

S562b | REPLACE WEIGHT MATRIX OF INCREMENTAL CLASS IN SHALLOW-LAYER FEATURE SIMILARITY CALCULATION UNIT WITH AVERAGE SHALLOW-LAYER FEATURE MATRIX

EXTRACT DEEP-LAYER FEATURE VECTOR AND SHALLOW-LAYER FEATURE VECTOR FROM INPUT IMAGE | S563

CALCULATE DEEP-LAYER COSINE SIMILARITY FOR EACH CLASS FROM DEEP-LAYER FEATURE VECTOR AND AVERAGE DEEP-LAYER WEIGHT VECTOR OF EACH CLASS | S564a

CALCULATE SHALLOW-LAYER COSINE SIMILARITY FOR EACH CLASS FROM SHALLOW-LAYER FEATURE VECTOR AND AVERAGE SHALLOW-LAYER WEIGHT VECTOR OF EACH CLASS | S564b

SCALE DEEP-LAYER COSINE SIMILARITY OF EACH CLASS | S565a

SCALE SHALLOW-LAYER COSINE SIMILARITY OF EACH CLASS | S565b

CALCULATE INTEGRATED COSINE SIMILARITY OF EACH CLASS BY ADDING DEEP-LAYER COSINE SIMILARITY AND SHALLOW-LAYER COSINE SIMILARITY | S566

WEIGHT INTEGRATED COSINE SIMILARITY OF INCREMENTAL CLASS | S567

REFER TO INTEGRATED COSINE SIMILARITY OF EACH CLASS AND SELECT CLASS WITH LARGEST INTEGRATED COSINE SIMILARITY | S568

s++

END

## INTERNATIONAL SEARCH REPORT

| International application No. |
| --- |
| **PCT/JP2024/003705** |

| A. | CLASSIFICATION OF SUBJECT MATTER |
| --- | --- |

*G06T 7/00*(2017.01)i
FI: G06T7/00 350B

According to International Patent Classification (IPC) or to both national classification and IPC

| B. | FIELDS SEARCHED |
| --- | --- |

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2017-146957 A (TOYOTA JIDOSHA KABUSHIKI KAISHA) 24 August 2017 (2017-08-24)<br>entire text, all drawings | 1-6 |
| A | JP 2018-195293 A (MITSUBISHI ELECTRIC CORPORATION) 06 December 2018 (2018-12-06)<br>entire text, all drawings | 1-6 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 March 2024** | **09 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/003705**

| Patent document cited in search report | | | Publication date (day/month/year) | Patent family member(s) | | | Publication date (day/month/year) |
|---|---|---|---|---|---|---|---|
| JP | 2017-146957 | A | 24 August 2017 | US | 9355334 | B1 | |
| | | | | entire text, all drawings | | | |
| JP | 2018-195293 | A | 06 December 2018 | US | 2018/0336683 | A1 | |
| | | | | entire text, all drawings | | | |

Form PCT/ISA/210 (patent family annex) (July 2022)

**REFERENCES CITED IN THE DESCRIPTION**

**Non-patent literature cited in the description**

- **TAO ; XIAOYU et al.** Few-shot class-incremental learning. *Proceedings of the IEEE/CVF Conference on Computer Vision and Pattern Recognition*, 2020

- **CHEN ; WEI-YU et al.** A closer look at few-shot classification. *arXiv preprint arXiv: 1904.04232*, 2019